# EUROPÄISCHE PATENTSCHRIFT

(11) **EP 1 897 382 B1**
(45) Veröffentlichungstag und Bekanntmachung des Hinweises auf die Patenterteilung: **21.01.2009**
(21) Anmeldenummer: 06754287.8
(22) Anmeldetag: 10.06.2006
(51) Int. Cl.: H04Q 1/14

(54) **VERTEILEREINRICHTUNG EINER TEKEKOMMUNIKATIONSANLAGE**
DISTRIBUTING UNIT FOR A TELECOMMUNICATIONS SYSTEM
DISPOSITIF DE REPARTITION D'UNE INSTALLATION DE TELECOMMUNICATION

(30) Priorität: 27.06.2005 DE 202005010160 U
(43) Veröffentlichungstag der Anmeldung: 12.03.2008
(73) Patentinhaber: CCS Technology, Inc., Wilmington, DE 19803 (US)
(72) Erfinder: VOGT, Rainer, 45897 Gelsenkirchen (DE); LIPKOWSKI, Marc, 58640 Iserlohn (DE)
(74) Vertreter: Sturm, Christoph
(86) Internationale Anmeldenummer: PCT/EP2006/005589
(87) Internationale Veröffentlichungsnummer: WO 2007/000237

(56) Entgegenhaltungen:
- WO-A-20/05081548
- DE-C1- 19 537 529
- DE-U1- 20 200 746

## Beschreibung

Die Erfindung betrifft eine Verteilereinrichtung einer Telekommunikationsanlage gemäß dem Oberbegriff des Anspruchs 1.

Aus dem Stand der Technik gemäß DE 195 37 529 C1 und DE 202 00 746 U1 sind als Verteilerleisten ausgebildete Verteilereinrichtungen einer Telekommunikationsanlage bekannt, die neben einem Drahtführungselement ein Funktionselement umfassen. Die Funktionselemente der dort offenbarten Verteilerleisten verfügen über Kontaktelemente zum Anschluss ankommender bzw. abgehender Kabeladern, wobei sich an die Funktionselemente der dort offenbarten Verteilerleisten oben sowie unten Drahtführungskanäle des Drahtführungselements in Form von Drahtführungsebenen anschließen. Die aus dem Stand der Technik bekannten Verteilerleisten verfügen demnach über jeweils mindestens zwei Drahtführungsebenen, wobei zwischen zwei Drahtführungsebenen das Funktionselement mit den Kontaktelementen positioniert ist. Bei der Verteilerleiste gemäß DE 202 00 746 U1 ist zu einer Seite des Funktionselements eine Drahtführungsebene angeordnet, auf der anderen Seite hingegen sind zwei Drahtführungsebenen positioniert.

Als weiterer Stand der Technik sei auf die WO 2006/039984 A1 verwiesen, veröffentlicht nach dem Prioritätsdag dieser Anmeldung, die ein Drahtführungselement mit ersten und zweiten Drahtführungskanälen offenbart, die unterschiedlich große Querschnitte aufweisen, wobei die Drahtführungskanäle mit den unterschiedlich großen Querschnitten in derselben Ebene verlaufen. Ein Funktionselement mit Kontaktelementen ist jedoch auch bei der WO 2006/039984 A1 in einer unterschiedlichen Ebene wie ein Drahtführungselement positioniert.

Den aus dem Stand der Technik bekannten Verteilerleisten ist gemeinsam, dass das Funktionselement mit den Kontaktelementen in einer unterschiedlichen Ebene verläuft wie die Drahtführungsebenen bildenden Drahtführungskanäle des Drahtführungselements. Hierdurch bestimmt sich der Platzbedarf für eine derartige Verteilerleiste, und zwar insbesondere dann, wenn mehrere solche Verteilerleisten sandwichartig zu einem Verteilerblock übereinander positioniert werden sollen. In einem solchen Verteilerblock verlaufen dann zwischen benachbarten Funktionselementen üblicherweise mehrere Drahtführungsebenen. Diesbezüglich kann z. B. auf die EP 0 966 844 B1 verwiesen werden.

Zur Gewährleistung zunehmend höherer Packungsdichten ist es daher wünschenswert, den Platzbedarf von Verteilereinrichtungen, wie z. B. Verteilerleisten, zu minimieren.

Hiervon ausgehend liegt der vorliegenden Erfindung das Problem zu Grunde, eine neuartige Verteilereinrichtung einer Telekommunikationsanlage zu schaffen.

Dieses Problem wird durch eine Verteilereinrichtung mit den Merkmalen des Anspruchs 1 gelöst. Erfindungsgemäß verlaufen das Drahtführungselement und das Funktionselement in derselben Ebene.

Im Sinne der hier vorliegenden Erfindung wird gegenüber den aus dem Stand der Technik bekannten Verteilereinrichtungen die Bauhöhe reduziert, und zwar dadurch, dass Funktionselemente in der Ebene der mit den Funktionselementen zusammenwirkenden Drahtführungskanäle des entsprechenden Drahtführungselements verlaufen. Die Kontaktelemente eines Funktionselements sind demnach in der Ebene positioniert, die von den mit dem Funktionselement zusammenwirkenden Drahtführungskanälen bzw. Drahtführungsebenen des Drahtführungselements definiert wird. Gegenüber Funktionsleisten, die zwei Drahtführungsebenen mit einem sandwichartig dazwischen positionierten Funktionselement aufweisen, kann die Bauhöhe um in etwa ein Drittel reduziert werden.

Nach einer vorteilhaften Weiterbildung der Erfindung ist das Funktionselement vor dem Drahtführungselement positioniert, derart dass eine Vorderwand des Drahtführungselements und eine Rückwand des Funktionselements aneinander angrenzen, wobei die Drahtführungskanäle von einer Seitenwand des Drahtführungselements zu der Vorderwand desselben verlaufen, und wobei die Kontaktelemente des Funktionselements, die der Kontaktierung bzw. dem Anschluss der Kabeladern dienen, innerhalb des Funktionselements benachbart zu der Vorderwand des Drahtführungselements positioniert sind.

Vorzugsweise weisen die Kontaktelemente an einem der Vorderwand des Drahtführungselements benachbarten ersten Ende eine Schneidklemme zur Kontaktierung einer über das Drahtführungselement an das Funktionselement herangeführten Kabelader auf, wobei die Kontaktelemente an einem dem ersten Ende gegenüberliegenden zweiten Ende eine Buchse für einen Kontakt eines Verbindungssteckers aufweisen, und wobei die Verbindungsstecker von einer Vorderwand des Funktionselements aus in dasselbe einführbar sind, um Kontakte zwischen Kabeladern herzustellen, die über das Drahtführungselement an das Funktionselement herangeführt und über die Rückwand desselben in das Funktionselement eingeführt sind.

Bevorzugte Weiterbildungen der Erfindung ergeben sich aus den Unteransprüchen und der nachfolgenden Beschreibung. Ausführungsbeispiele werden anhand der Zeichnung näher erläutert. In der Zeichnung zeigt:
- Fig. 1: eine Verteilereinrichtung nach dem Stand der Technik in perspektivischer Vorderansicht;
- Fig. 2: eine erfindungsgemäße Verteilereinrichtung in perspektivischer Vorderansicht;
- Fig. 3:: die erfindungsgemäße Verteilereinrichtung der Fig. 2 in Explosionsdarstellung;
- Fig. 4:: ein Kontaktelement eines Funktionselements der erfindungsgemäßen Verteilereinrichtung der Fig. 2 zusammen mit einer Kabelader;
- Fig. 5:: das Kontaktelement der Fig. 4 in Explosionsdarstellung; und
- Fig. 6:: einen Verbindungsstecker der erfindungsgemäßen Verteilereinrichtung der Fig. 2.

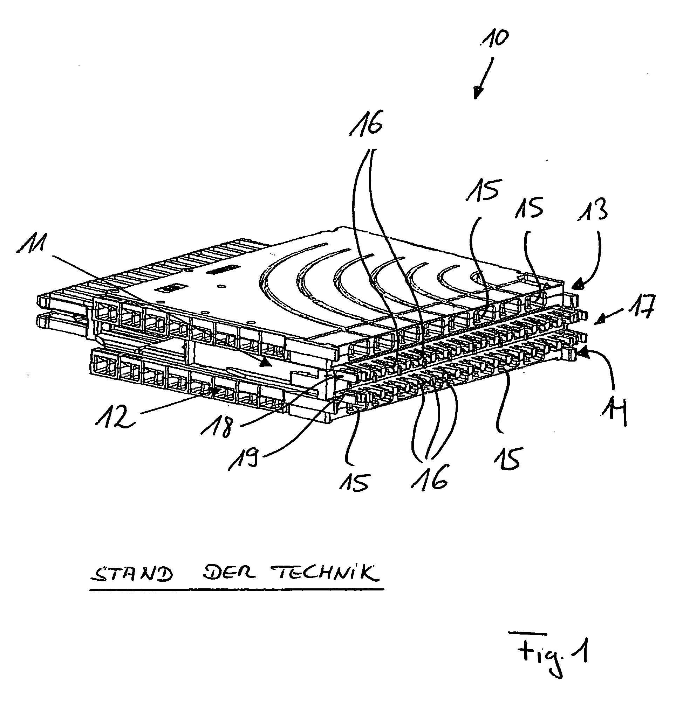

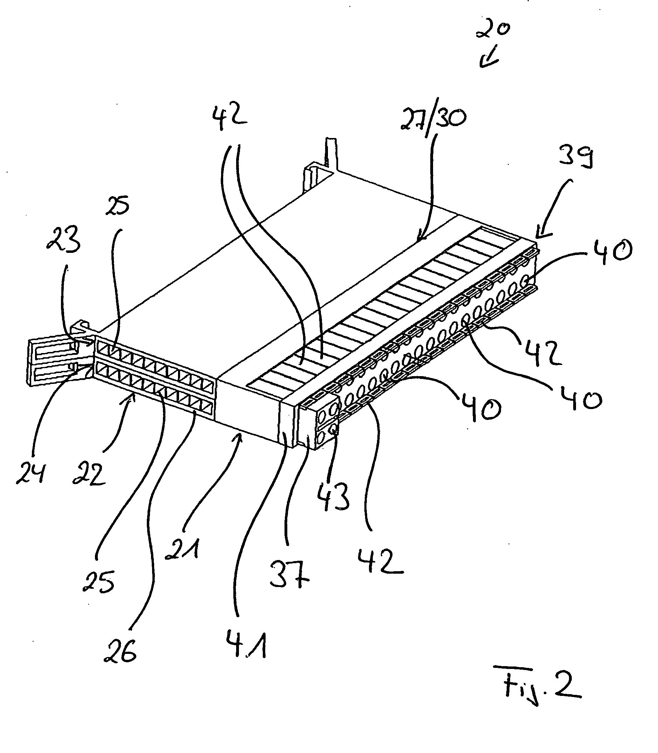

Bevor nachfolgend unter Bezugnahme auf Fig. 2 bis 6 die hier vorliegende Erfindung in größerem Detail beschrieben wird, soll vorab unter Bezugnahme auf Fig. 1 auf eine aus dem Stand der Technik bekannte Verteilereinrichtung eingegangen werden.

So zeigt Fig. 1 eine aus dem Stand der Technik bekannte Verteilereinrichtung 10 einer Telekommunikationsanlage, die als Verteilerleiste ausgebildet ist. Die Verteilerleiste 10 nach dem Stand der Technik verfügt über ein Funktionselement 11 und ein Drahtführungselement 12, wobei das Drahtführungselement 12 zu beiden Seiten des Funktionselements 11 Drahtführungsebenen 13 und 14 aus Drahtführungskanälen 15 bildet. Zwischen den beiden Drahtführungsebenen 13 und 14 ist das Funktionselement 11 sandwichartig positioniert, wobei das Funktionselement 11 mehrere Kontaktelemente 16 für den Anschluss ankommender bzw. abgehender Kabeladern aufweist. Die Funktionsleiste 10 des Standes der Technik gemäß Fig. 1 verfügt demnach über drei Ebenen, nämlich zwei Drahtführungsebenen 13 und 14 sowie eine zwischen den Drahtführungsebenen 13 und 14 verlaufende Ebene 17, die von dem Funktionselement 11 bzw. den Kontaktelementen 16 des Funktionselements gebildet wird. Die Kontaktelemente 16 des Funktionselements 11 bilden zwei Reihen 18 bzw. 19, die beide innerhalb der Ebene 17 zwischen den Drahtführungsebenen 13 und 14 sowie parallel zu den Drahtführungsebenen 13 und 14 verlaufen. Durch sandwichartiges Übereinanderordnen mehrerer derartiger Verteilerleisten 10 kann ein Verteilerblock aufgebaut werden, wobei der durch eine solche Verteilerleiste 10 in der Höhe benötigte Bauraum durch die beiden Drahtführungsebenen 13 und 14 sowie das zwischen den beiden Drahtführungsebenen 13 und 14 positionierte Funktionselement 11 der Verteilerleiste 10 bestimmt wird.

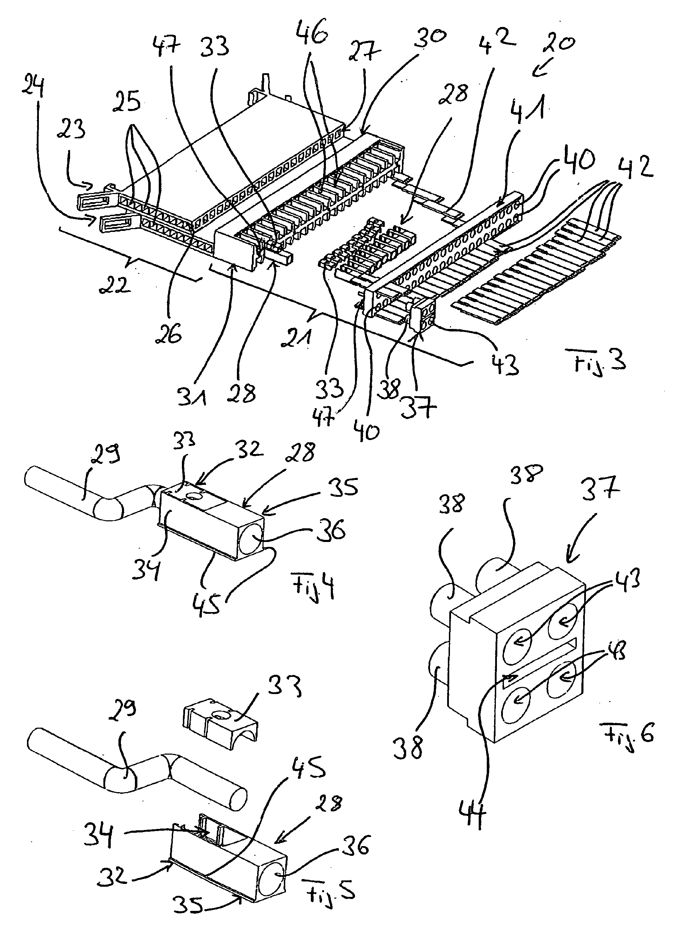

Fig. 2 zeigt eine erfindungsgemäße als Verteilerleiste 20 ausgebildete Verteilereinrichtung einer Telekommunikationsanlage, wobei die erfindungsgemäße Verteilerleiste 20 wiederum über ein Funktionselement 21 sowie ein Drahtführungselement 22 verfügt. Das Drahtführungselement 22 verfügt über Drahtführungsebenen 23 und 24 bildende Drahtführungskanäle 25, wobei die Drahtführungskanäle 25 ausgehend von einer Seitenwand 26 des Drahtführungselements 22 in Richtung auf eine Vorderwand 27 desselben verlaufen. Das Funktionselement 21 verfügt über Kontaktelemente 28 zum Anschluss ankommender bzw. abgehender Kabeladern. Fig. 4 zeigt ein derartiges Kontaktelement 28 mit einer Kabelader 29 in Alleindarstellung.

Im Sinne der hier vorliegenden Erfindung verläuft das Funktionselement 21 in der durch das Drahtführungselement 22 definierten Ebene, nämlich in der durch die beiden Drahtführungsebenen 23 und 24 definierten Ebene. Gemäß Fig. 2 und 3 ist das Funktionselement 21 vor dem Drahtführungselement 22 positioniert, und zwar derart, dass die Vorderwand 27 des Drahtführungselements 22 einer Rückwand 30 des Funktionselements 21 gegenüberliegt. Die Vorderwand 27 des Drahtführungselements 22 sowie die Rückwand 30 des Funktionselements 21 verfügen dabei über einander entsprechende Abmessungen.

Die Bauhöhe der erfindungsgemäßen Verteilerleiste 20 wird demnach durch die Bauhöhe des Drahtführungselements 22 bzw. der beiden Drahtführungsebenen 23 und 24 bestimmt, das Funktionselement 21 ist vor dem Drahtführungselement 22 positioniert und beansprucht keine weitere Bauhöhe. Hierdurch kann die Bauhöhe der erfindungsgemäßen Verteilerleiste 20 der Fig. 2 und 3 gegenüber der Verteilerleiste 10 nach dem Stand der Technik gemäß Fig. 1 um in etwa ein Drittel reduziert werden.

Die Kontaktelemente 28 zur Kontaktierung der Kabeladern 29 sind in einem Aufnahmeabschnitt 31 des Funktionselements 21 angeordnet, und zwar derart, dass die Kontaktelemente 28 mit einem ersten Ende 32 benachbart zur Vorderwand 27 des Drahtführungselements 22 angeordnet sind. An diesem ersten Ende 32 der Kontaktelemente 28 bilden dieselben Schneidklemmen aus, die jeweils von zwei Schneidklemmenhälften 33 und 34 gebildet werden. Eine Kabelader 29 wird mit einem Ende zwischen den beiden Schneidklemmenhälften 33 und 34 positioniert, wobei nach Zusammenbau der beiden Schneidklemmenhälften 33 und 34 (siehe Fig. 4) ein elektrischer Kontakt zwischen der Kabelader 29 und dem Kontaktelement 28 hergestellt ist.

An einem dem ersten Ende 32 gegenüberliegenden Enden 35 verfügen die Kontaktelemente 28 über eine Buchse 36, in welche ein Verbindungsstecker 37 mit einem Kontakt 38 desselben einsteckbar ist, um so eine Kontaktierung zwischen ankommenden und abgehenden Kabeladern zu etablieren. Wie Fig. 2, 3 entnommen werden kann, ist der Stecker 37 über eine Vorderwand 39 des Funktionselements 21 in dasselbe und damit in die Buchsen 36 der Kontaktelemente 28 einführbar, und zwar über Ausnehmungen 40 in einer das Funktionselement 21 an der Vorderwand 39 abschließenden Vorderplatte 41, die mit dem Aufnahmeabschnitt 31 des Funktionselements 21 lösbar verbunden ist.

Wie insbesondere Fig. 4 entnommen werden kann, weisen die Kontaktelemente 28 Führungsleisten 45 auf, über welche dieselben in Ausnehmungen 46 innerhalb des Aufnahmeabschnitts 31 eingeführt werden. Nach dem Einführen der Kontaktelemente 28 in die Ausnehmungen 46 des Aufnahmeabschnitts 31 wird die Vorderplatte 41 am Aufnahmeabschnitt 31 über eine Steckverbindung 47 befestigt, wobei die Kontaktelemente 28 über Plättchen 42 abgedeckt werden.

An der den Kontakten 38 gegenüberliegenden Seite der Verbindungsstecker 37 sind in dieselben Ausnehmungen 43 bzw. 44 integriert. Über die Ausnehmungen 43 sind Kontakte weiterer Steckerelemente in den Verbindungsstecker 37 einführbar, um so z. B. einen Überstrom- bzw. Überspannungsschutz bzw. einen DSL-Splitter mit den Kabeladern zu kontaktieren. Über die Ausnehmung 44 ist in den Verbindungsstecker 37 ein Trennstecker einführbar, um so eine Trennfunktion zu etablieren.

Die erfindungsgemäße Verteilereinrichtung zeichnet sich gegenüber den aus dem Stand der Technik bekannten Verteilereinrichtungen durch eine verringerte Bauhöhe aus. Das Funktionselement bzw. Kontaktelemente des Funktionselements erstrecken sich in der durch Drahtführungskanäle gebildeten Ebene.

Zur Herstellung eines Kontakts zwischen ankommenden und abgehenden Kabeladern dienen Verbindungsstecker, die über eine Vorderwand des Funktionselements in die mit den Kabeladern verbundenen Kontaktelemente eingesteckt werden. Über in die Verbindungsstecker einsteckbare Module kann eine Überspannungsschutzfunktion und/oder eine Überstromschutzfunktion und/oder eine Filterfunktion in Form von DSL-Splittern in die Verteilereinrichtung integriert werden.

### Bezugszeichenliste

- 10: Verteilerleiste
- 11: Funktionselement
- 12: Funktionselement
- 13: Drahtführungsebene
- 14: Drahtführungsebene
- 15: Drahtführungskanal
- 16: Kontaktelement
- 17: Ebene
- 18: Reihe
- 19: Reihe
- 20: Verteilerleiste
- 21: Funktionselement
- 22: Drahtführungselement
- 23: Drahtführungsebene
- 24: Drahtführungsebene
- 25: Drahtführungskanal
- 26: Seitenwand
- 27: Vorderwand
- 28: Kontaktelement
- 29: Kabelader
- 30: Rückwand
- 31: Aufnahmeabschnitt
- 32: Ende
- 33: Schneidklemmhälfte
- 34: Schneidklemmhälfte
- 35: Ende
- 36: Buchse
- 37: Verbindungsstecker
- 38: Kontakt
- 39: Vorderwand
- 40: Ausnehmung
- 41: Vorderplatte
- 42: Plättchen
- 43: Ausnehmung
- 44: Ausnehmung
- 45: Führungsleiste
- 46: Ausnehmung
- 47: Steckverbindung

## Patentansprüche

1. Verteilereinrichtung, insbesondere Verteilerleiste, einer Telekommunikationsanlage, mit einem Funktionselement und mit einem Drahtführungselement, wobei das Funktionselement Kontaktelemente für den Anschluss ankommender bzw. abgehender Kabeladern aufweist, und wobei das Drahtführungselement Drahtführungsebenen bildende Drahtführungskanäle zur Führung der Kabeladern aufweisen, **dadurch gekennzeichnet, dass** das Drahtführungselement (22) und das Funktionselement (21) in derselben Ebene verlaufen.

2. Verteilereinrichtung nach Anspruch 1, **dadurch gekennzeichnet, dass** die Drahtführungskanäle (25) des Drahtführungselements (22) zwei Drahtführungsebenen (23, 24) bildenden, und dass das Funktionselement (21) sich in der durch die beiden Drahtführungsebenen (23, 24) definierten Ebene erstreckt.

3. Verteilereinrichtung nach Anspruch 1 oder 2, **dadurch gekennzeichnet, dass** das Funktionselement (21) vor dem Drahtführungselement (22) positioniert ist, derart dass eine Vorderwand (27) des Drahtführungselements (22) und eine Rückwand (30) des Funktionselement (21) aneinander angrenzen, wobei die Vorderwand (27) des Drahtführungselements (22) und die Rückwand (30) des Funktionselement (21) zumindest in der Höhe einander entsprechende Abmessungen aufweisen.

4. Verteilereinrichtung nach einem oder mehreren der Ansprüche 1 bis 3, **dadurch gekennzeichnet, dass** die Drahtführungskanäle (25) von einer Seitenwand (26) des Drahtführungselements (22) zu einer Vorderwand (27) desselben verlaufen, und dass die Kontaktelemente (28) des Funktionselements (21), die der Kontaktierung bzw. dem Anschluss der Kabeladern (29) dienen, benachbart zu der Vorderwand (27) des Drahtführungselements (22) positioniert sind.

5. Verteilereinrichtung nach einem oder mehreren der Ansprüche 1 bis 4, **dadurch gekennzeichnet, dass** die Kontaktelemente (28) an einem der Vorderwand (27) des Drahtführungselements (22) benachbarten ersten Ende (32) eine Schneidklemme (33, 34) zur Kontaktierung einer über das Drahtführungselement (22) an das Funktionselement (21) herangeführten Kabelader (29) aufweisen, und dass die Kontaktelemente (28) an einem dem ersten Ende (32) gegenübediegenden zweiten Ende (35) eine Buchse (36) für einen Kontakt (38) eines Verbindungssteckers (37) aufweisen.

6. Verteilereinrichtung nach einem oder mehreren der Ansprüche 1 bis 5, **dadurch gekennzeichnet, dass** ein Verbindungsstecker (37) von einer Vorderwand (39) des Funktionselements (21) aus in dasselbe einführbar ist, um eine Kontaktierung zwischen Kabeladern herzustellen, die über das Drahtführungselement (22) an das Funktionselement (21) herangeführt und über eine Rückwand (30) desselben in das Funktionselement (21) eingeführt sind.

7. Verteilereinrichtung nach einem oder mehreren der Ansprüche 1 bis 6, **dadurch gekennzeichnet, dass** das Funktionselement (21) einen Aufnahmeabschnitt (31) für die Kontaktelemente (28) aufweist, wobei der Aufnahmeabschnitt (31) an einer Vorderwand (39) des Funktionselements (21) von einer lösbar mit dem Aufnahmeabschnitt (31) verbundenem Vorderplatte (41) abgedeckt ist.

8. Verteilereinrichtung nach Anspruch 7, **dadurch gekennzeichnet, dass** in die Vorderplatte (41) Ausnehmungen (40) integriert sind, über welche die Kontakte (38) der Verbindungsstecker (37) in die Buchsen (36) der Kontaktelemente (28) einführbar sind.

9. Verteilereinrichtung nach einem oder mehreren der Ansprüche 5 bis 8, **dadurch gekennzeichnet, dass** in die Verbindungsstecker (37) an einem den Kontakten (38) gegenüberliegenden Abschnitt Ausnehmungen (43) zum Anschluss von Überspannungsschutzmodulen und/oder von Überspannungsstrommodulen und/oder von DSL-Splittermodulen integriert sind.

## Claims

1. Distribution device, in particular a distribution strip, for a telecommunications installation, having a functional element and having a wire routing element, with the functional element having contact elements for the connection of incoming and outgoing cable cores, and with the wire routing element having wire routing channels which form wire routing planes, for routing the cable cores, **characterized in that** the wire routing element (22) and the functional element (21) run on the same plane.

2. Distribution device according to Claim 1, **characterized in that** the wire routing channels (25) of the wire routing element (22) form two wire routing planes (23, 24), and **in that** the functional element (21) extends on the plane defined by the two wire routing planes (23, 24).

3. Distribution device according to Claim 1 or 2, **characterized in that** the functional element (21) is positioned in front of the wire routing element (22) such that a front wall (27) of the wire routing element (22) and a rear wall (30) of the functional element (21) are adjacent to one another, with the front wall (27) of the wire routing element (22) and the rear wall (30) of the functional element (21) having dimensions which correspond to one another, at least in height.

4. Distribution device according to one or more of Claims 1 to 3, **characterized in that** the wire routing channels (25) run from a side wall (26) of the wire routing element (22) to a front wall (27) of it, and **in that** the contact elements (28) of the functional element (21) which are used to make contact with or for a connection of the cable cores (29), are positioned adjacent to the front wall (27) of the wire routing element (22).

5. Distribution device according to one or more of Claims 1 to 4, **characterized in that** the contact elements (28) have an insulation displacement terminal (33, 34) for making contact with a cable core (29) which is routed to the functional element (21) via the wire routing element (22), at a first end (32) adjacent to the front wall (27) of the wire routing element (22), and **in that** the contact elements (28) have a socket (36) for a contact (38) of a connecting plug (37) at a second end (35), opposite the first end (32).

6. Distribution device according to one or more of Claims 1 to 5, **characterized in that** a connecting plug (37) can be inserted into the functional element (21) from a front wall (39) of the functional element (21) in order to make contact between cable cores which are routed to the functional element (21) via the wire routing element (22), and are inserted into the functional element (21) via a rear wall (30) of it.

7. Distribution device according to one or more of Claims 1 to 6, **characterized in that** the functional element (21) has a holding section (31) for the contact elements (28), with the holding section (31) being covered, on a front wall (39) of the functional element (21), by a front plate (41) which is detachably connected to the holding section (31).

8. Distribution device according to Claim 7, **characterized in that** recesses (40) are integrated in the front plate (41), via which the contacts (38) of the connecting plugs (37) can be inserted into the sockets (36) of the contact elements (28).

9. Distribution device according to one or more of Claims 5 to 8, **characterized in that** recesses (43) for connection of overvoltage protection modules and/or of overvoltage current modules and/or DSL splitter modules are integrated in the connecting plugs (37) on a section opposite the contacts (38).

## Revendications

1. Dispositif de répartition, en particulier bloc de répartition d'une installation de télécommunications, comprenant un élément fonctionnel et un élément guide-câble, l'élément fonctionnel présentant des éléments de contact pour le raccordement de fils de câble arrivant ou sortant, et l'élément guide-câble présentant des canaux guide-câble formant des plans guide-câble pour le guidage des fils de câble, **caractérisé en ce que** l'élément guide-câble (22) et l'élément fonctionnel (21) s'étendent dans le même plan.

2. Dispositif de répartition selon la revendication 1, **caractérisé en ce que** les canaux guide-câble (25) de l'élément guide-câble (22) forment deux plans guide-câble (23, 24) et **en ce que** l'élément fonctionnel (21) s'étend dans le plan défini par les deux plans guide-câble (23, 24).

3. Dispositif de répartition selon la revendication 1 ou 2, **caractérisé en ce que** l'élément fonctionnel (21) est positionné avant l'élément guide-câble (22), de telle sorte qu'une paroi avant (27) de l'élément guide-câble (22) et une paroi arrière (30) de l'élément fonctionnel (21) soient adjacentes l'une à l'autre, la paroi avant (27) de l'élément guide-câble (22) et la paroi arrière (30) de l'élément fonctionnel (21) présentant des dimensions se correspondant, au moins en hauteur.

4. Dispositif de répartition selon l'une quelconque ou plusieurs des revendications 1 à 3, **caractérisé en ce que** les canaux guide-câble (25) s'étendent depuis une paroi latérale (26) de l'élément guide-câble (22) jusqu'à une paroi avant (27) de celui-ci, et **en ce que** les éléments de contact (28) de l'élément fonctionnel (21), qui servent à contacter ou raccorder les fils de câble (29), sont positionnés à côté de la paroi avant (27) de l'élément guide-câble (22).

5. Dispositif de répartition selon l'une quelconque ou plusieurs des revendications 1 à 4, **caractérisé en ce que** les éléments de contact (28) présentent, à une première extrémité (32) adjacente de la paroi avant (27) de l'élément guide-câble (22), un contact autodénudant (33, 34) pour contacter un fil de câble (29) rapproché par le biais de l'élément guide-câble (22) de l'élément fonctionnel (21), et **en ce que** les éléments de contact (28) présentent, à une deuxième extrémité (35) opposée à la première extrémité (32), une douille (36) pour un contact (38) d'une fiche de connexion (37).

6. Dispositif de répartition selon l'une quelconque ou plusieurs des revendications 1 à 5, **caractérisé en ce qu'**une fiche de connexion (37) peut être introduite depuis une paroi avant (39) de l'élément fonctionnel (21) dans celui-ci, afin d'établir un contact entre les fils de câble, qui sont approchés de l'élément fonctionnel (21) par le biais de l'élément guide-câble (22) et qui sont introduits par le biais d'une paroi arrière (30) de l'élément fonctionnel (21) dans ce dernier.

7. Dispositif de répartition selon l'une quelconque ou plusieurs des revendications 1 à 6, **caractérisé en ce que** l'élément fonctionnel (21) présente une portion de réception (31) pour les éléments de contact (28), la portion de réception (31) étant recouverte au niveau d'une paroi avant (39) de l'élément fonctionnel (21) par une plaque avant (41) connectée de manière détachable à la portion de réception (31).

8. Dispositif de répartition selon la revendication 7, **caractérisé en ce que** des évidements (40) sont pratiqués dans la plaque avant (41), par le biais desquels les contacts (38) de la fiche de connexion (37) peuvent être introduits dans les douilles (36) des éléments de contact (28).

9. Dispositif de répartition selon l'une quelconque ou plusieurs des revendications 5 à 8, **caractérisé en ce que**, dans la fiche de connexion (37), des évidements (43) pour le raccordement de modules de protection contre les surtensions et/ou de modules de protection contre les surintensités et/ou de modules diviseurs de DSL sont pratiqués au niveau d'une portion opposée aux contacts (38).
